(19) **Europäisches Patentamt**

**European Patent Office**

**Office européen des brevets**

(11) **EP 0 744 843 B1**

(12) **EUROPÄISCHE PATENTSCHRIFT**

(45) Veröffentlichungstag und Bekanntmachung des Hinweises auf die Patenterteilung:
**04.05.2005 Patentblatt 2005/18**

(51) Int Cl.⁷: **H04B 7/26**, H04L 29/02, E05B 49/00, G07C 9/00, H04B 1/16

(21) Anmeldenummer: **96108471.2**

(22) Anmeldetag: **28.05.1996**

(54) **Datenübertragungssystem**

Data communication system

Système de communication de données

(84) Benannte Vertragsstaaten:
**DE FR GB IT**

(30) Priorität: **26.05.1995 DE 19519450**

(43) Veröffentlichungstag der Anmeldung:
**27.11.1996 Patentblatt 1996/48**

(73) Patentinhaber: **SimonsVoss Technologies AG
85774 Unterföhring (DE)**

(72) Erfinder: **Simons, Oliver
80797 München (DE)**

(74) Vertreter: **Stellbrink, Axel
Vossius & Partner
Siebertstrasse 4
81675 München (DE)**

(56) Entgegenhaltungen:
**EP-A- 0 502 566          WO-A-95/10141
DE-A- 4 230 011          GB-A- 1 168 509
US-A- 5 299 117**

**Beschreibung**

Die Erfindung betrifft ein System mit Systemkomponenten, zwischen denen eine Datenübertragung stattfindet, sowie ein Verfahren zur Steuerung eines solchen Systems insbesondere bei der Aufnahme der Datenübertragung.

Ein typisches System der angegebenen Art ist ein schnurloses Telefon wie es beispielsweise in dem Aufsatz "Schnurloses Telefon Sinus 11" in Unterrichtsblätter Jg. 45 4/1992, Seite 132 - 143 erläutert ist. Ein schnurloses Telefon besteht aus zwei Komponenten, nämlich einer Feststation und einem akkubetriebenen Handgerät. Diese sind jeweils mit einem Sender und einem Empfänger zur wechselseitigen Kommunikation ausgerüstet. Wenn kein Telefongespräch geführt wird, werden Teile beider Komponenten in einen energiesparenden Schlafmodus geschaltet. Die Empfänger verbleiben jedoch aktiv, um feststellen zu können, wenn von der anderen Komponente ein Verbindungsaufbau verlangt wird. Der empfangsbereit gehaltene Empfänger des Handgeräts begrenzt dessen Betriebsdauer mit einer Akkuladung.

Andere Systeme der oben angegebenen Art sind annäherungssensitive Systeme zur automatischen drahtlosen Personen- und Fahrzeugidentifikation, beispielsweise im Rahmen von Verkehrsleitsystemen, bei der Mautgebührenerfassung oder bei der Zutrittskontrolle von Personen und Fahrzeugen zu gesicherten Räumen. Bei der Zutrittskontrolle können sie rein mechanische Schließsysteme ersetzen. Beispiele sind in DE-A-41 11 582, DE-C-41 34 922 und DE-A-42 30 011 offenbart.

Auch diese Systeme beinhalten zwei Komponenten, nämlich eine Basisstation und einen Transponder.

Zwischen beiden findet ein drahtloser Datenaustausch statt, der der Basisstation die Identifikation des Transponders ermöglicht. Bei der Zutrittskontrolle löst die Basisstation das Öffnen eines Schlosses aus, sobald sie in der Nähe den Transponder einer zutrittsberechtigten Person identifiziert.

Konventionelle Systeme dieser Art sind mit folgenden Nachteilen behaftet. Idealerweise sollten sie annäherungssensitiv sein, d.h. sie sollten den Datenaustausch automatisch aufnehmen können, sobald sich der Transponder an die Basisstation annähert, ohne daß eine Bedienungsperson eingreifen muß. Dies erfordert, daß beide Komponenten stets eingeschaltet sind. Der Transponder hat oft nur die Größe einer Kreditkarte oder eines Schlüsselanhängers, um leicht überall hin mitgeführt zu werden. Daher muß er mit winzigen Batterien betrieben werden, die im Dauerbetrieb nach kurzer Zeit erschöpft sind.

Zur Vermeidung dieses Nachteils werden passiv betriebene Transponder eingesetzt, die lediglich ein bestimmtes Echo eines von der Basisstation ausgesendeten Signals zurückwerfen oder es wurden Transponder vorgeschlagen, die ihre Betriebsenergie dem von der Basisstation ausgesendeten Signal entnehmen. Diese Systeme benötigen leistungsstarke Basisstationen, die entsprechend groß sind und einen hohen Stromverbrauch aufweisen. Außerdem sind sie wenig täuschungssicher.

US-A-5 299 117 beschreibt ein Verfahren bzw. eine Vorrichtung gemäß dem Oberbegriff des unabhängigen Patentansprüche.

EP-A-0 502 566 beschreibt ein Kommunikationsverfahren cm VHF und LF Band, wobei der Empfänger Teil seiner Schaltung in den Schlafmodus setzen kann.

Der Erfindung liegt die Aufgabe zugrunde, ein mit geringem Leistungsverbrauch arbeitendes System mit zwei Systemkomponenten, zwischen denen eine bidirektionale Datenübertragung stattfindet, zu schaffen. Außerdem soll ein Verfahren zum Betrieb eines solchen Systems zur Verfügung gestellt werden.

Die Lösung dieser Aufgabe gelingt mit dem in den Ansprüchen 1 und 2 angegebenen Verfahren bzw. den in Ansprüchen 7 und 8 angegebenen Vorrichtungen.

Die Erfindung beruht auf der Überlegung, daß die angegebenen Systeme häufig nur während eines sehr kleinen Bruchteils ihrer Gesamtbetriebszeit eine Datenübertragung vornehmen. Bei einem Zutrittskontrollsystem beispielsweise wird oft nur wenige Sekunden pro Tag ein Identifikations- bzw. Zutrittskontrollprotokoll abgearbeitet, nämlich dann, wenn eine Person tatsächlich Zutritt verlangt. Die Erfindung ermöglicht es, das System in der übrigen Zeit bei minimalem Energieverbrauch in Bereitschaft zu halten und mit beiden Komponenten (Basisstation und Transponder) gemeinsam in einen aktiven Modus zu wechseln, wenn auch nur eine von ihnen eine Datenübertragung wünscht - beispielsweise weil sie die Annäherung einer Person festgestellt hat. Während dieser Bereitschaft kann eine möglicherweise vorhandene Empfangseinrichtung einer ersten Komponente ausgeschaltet bleiben und eine Empfangseinrichtung einer zweiten Komponente braucht lediglich periodisch kurzzeitig aktiviert, d. h. eingeschaltet bzw. auf volle Empfangsbereitschaft gesetzt zu werden und kann sonst ausgeschaltet bzw. in einem energiesparenden Schlafmodus ohne Empfangsbereitschaft verbleiben. Dies ist energiesparend, da Empfangseinrichtungen gewöhnlich im aktivierten Betrieb einen relativ hohen Stromverbrauch aufweisen. Der Stromverbrauch ist durch den Ruhestrom in Analogschaltungen bestimmt, die zur Verstärkung relativ schwacher Empfangssignale notwendig sind. Bei äufgehobener Empfangsbereitschaft können diese Analogschaltungen abgeschaltet sein, so daß der Ruhestrom sehr gering ist.

Die Erfindung ermöglicht es weiterhin, die für die Aussendung eines Aktivierungssignals oder für die Datenübertragung notwendigen Sendeleistungen stark zu reduzieren und somit einen weiteren Energiespareffekt zu erzielen, da leistungsfähige Empfangseinrichtungen verwendet werden können, ohne den Energieverbrauch nachteilig zu beeinflussen, da sie lediglich für sehr kurze Zeiten eingeschaltet sind.

Die Signalübertragung zwischen den Systemkomponenten erfolgt vorzugsweise drahtlos durch elektromagnetische Wellen, Lichtwellen (beispielsweise Infrarotlicht) oder mittels Ultraschall.

Die Unteransprüche betreffen vorteilhafte Ausgestaltungen der Erfindung.

Die Ausgestaltung nach Anspruch 3 stellt ein Zutrittskontrollsystem dar, das eine besonders einfache Erkennung, ob eine Datenübertragung gewünscht ist, ermöglicht. Der Schalter kann von der einen Zutritt verlangenden Person manuell oder automatisch betätigt werden.

Einen erhöhten Bedienungskomfort weist die Ausgestaltung nach Anspruch 4 auf, da sie eine berührungslose, annäherungsensitive Aktivierung des Systems ermöglicht. Die besondere Ausgestaltung nach Anspruch 5 führt zu einem verringerten Energieverbrauch bei der Feststellung, ob Bedarf an einer Datenübertragung besteht.

Auch die Ausgestaltung nach Anspruch 6 trägt zu einem geringen Energieverbrauch bei, da die Empfangseinrichtung der zweiten Komponente lediglich dann eingeschaltet wird, wenn dies notwendig ist.

Bevorzugte Ausführungsbeispiele der Erfindung sind in den Zeichnungen dargestellt, in denen

Figur 1 schematisch ein annäherungssensitives Kontrollsystem, und

Figuren 2 und 3 Ablaufschemata für den Betrieb eines solchen Systems darstellen.

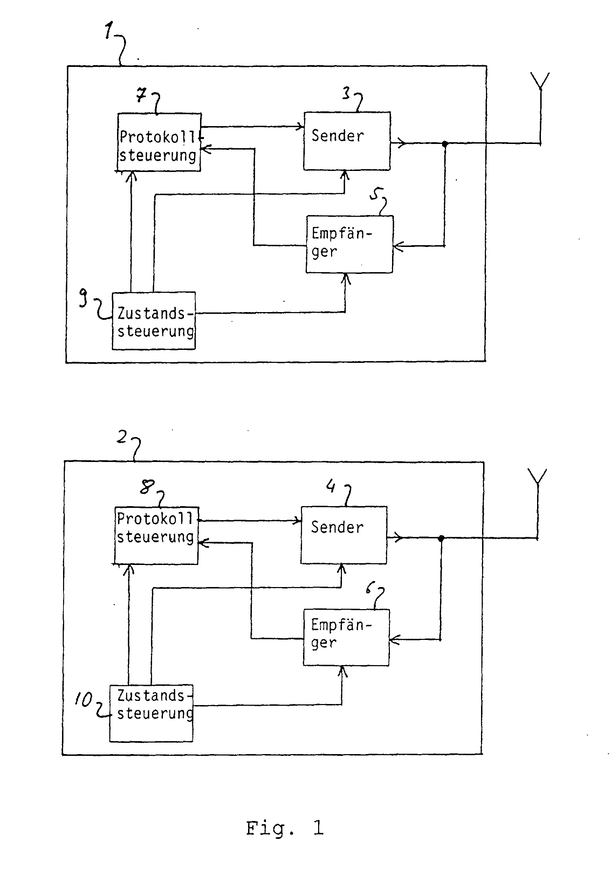

Das annäherungssensitive Kontrollsystem nach Fig. 1 weist eine Basisstation 1 sowie einen Transponder 2 auf. Die Basisstation 1 eignet sich zum Ersatz herkömmlicher mechanischer Schlösser. Der Transponder 2 ist mobil und veranlaßt bei Annäherung an die Basisstation 1, daß diese den Zutritt zu einem gesicherten Raum freigibt, beispielsweise eine Tür elektromagnetisch öffnet.

Basisstation 1 und Transponder 2 sind jeweils mit einem Sender 3, 4 und einem Empfänger 5, 6 versehen. Diese sind wiederum mit jeweils einer Protokollsteuerung 7, 8 verbunden. Die Protokollsteuerung 7 der Basisstation 1 kommuniziert über die Sender 3, 4 sowie über die Empfänger 5, 6 drahtlos mit der Protokollsteuerung 8 des Transponders 2, um festzustellen, ob der Transponder einer zutrittsberechtigten Person zugeordnet ist. Dazu werden basisstations- und transponderspezifische Daten nach einem Identifikations- bzw. Kontrollprotokoll verschlüsselt übertragen.

Basisstation 1 und Transponder 2 sind außerdem jeweils mit einer Zustandssteuerung 9, 10 versehen, die mit den entsprechenden Sendern 3, 4, Empfängern 5, 6 und Protokollsteuerungen 7, 8 verbunden sind, um verschiedene Betriebszustände einzustellen.

Den größten Teil Ihrer Betriebszeit verbleiben Basisstation 1 und Transponder 2 unter dem Einfluß der jeweiligen Zustandssteuerung 9, 10 in einem energiesparenden Schlafmodus. In diesem Schlafmodus sind die Sender 3, 4, die Empfänger 5, 6 und die Protokollsteuerungen 7, 8 ausgeschaltet. Lediglich die Zustandssteuerungen 9, 10 bleiben aktiv.

Bei einer Annäherung des Transponders 2 an die Basisstation 1 kann nun entweder die Basisstation oder der Transponder die zur Abarbeitung des Kontrollprotokolls führende Aktivierung des Systems einleiten. Dementsprechend unterscheiden sich die Zustandssteuerungen 9, 10 voneinander. Im folgenden wird diejenige Systemkomponente (Basisstation 1 oder Transponder 2), die die Aktivierung einleitet, als "aktivierende Komponente" und die andere Systemkomponente (Transponder 2 oder Basisstation 1) als "zu aktivierende Komponente" bezeichnet.

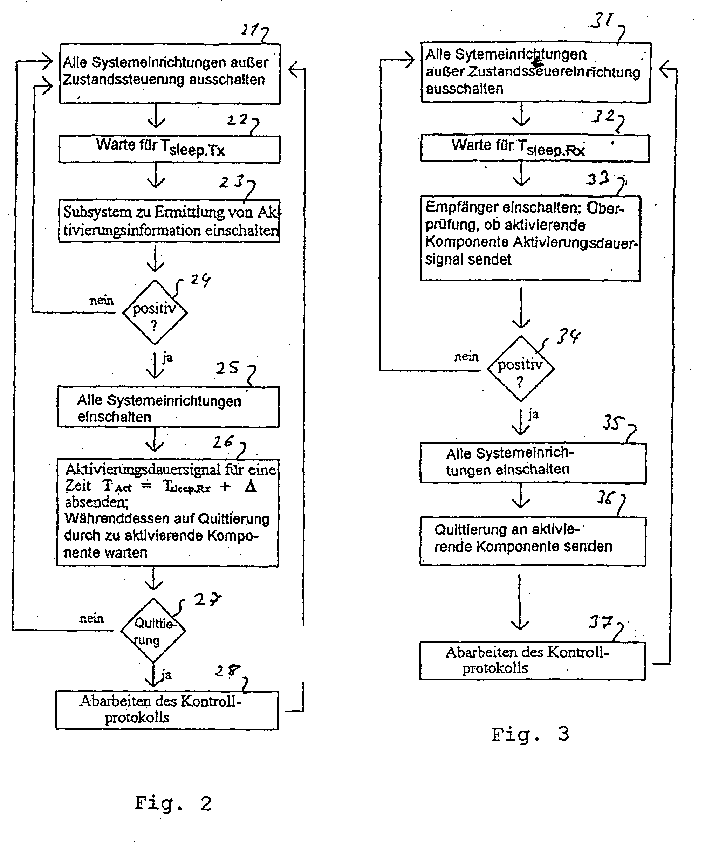

Die von der entsprechenden Zustandssteuerung gesteuerte Arbeitsweise der aktivierenden Komponente ist in Fig. 2 dargestellt.

In Schritt 21 veranlaßt die Zustandssteuerung zunächst, daß alle Systemeinrichtungen (Sender, Empfänger, Protokollsteuerung) der aktivierenden Komponente ausgeschaltet sind, um diese in den Schlafmodus zu bringen. Lediglich die Zustandssteuerung selber bleibt eingeschaltet. Unter ihrer Kontrolle bleibt die aktivierende Systemkomponente für eine gewisse Wartezeit $T_{sleep.Tx}$ im Schlafmodus (Schritt 22).

Nach Ablauf der Wartezeit veranlaßt die Zustandssteuerung einen Übergang der aktivierenden Systemkomponente in einen Detektormodus (Schritt 23). In diesem Modus wird kurzzeitig eine Einrichtung zur Erkennung, ob sich möglicherweise eine zu aktivierende Systemkomponente in der Nähe befindet eingeschaltet. Stellt die aktivierende Systemkomponente die Basisstation dar, so kann beispielsweise mittels eines Infrarot-Melders, eines Radar-Melders, eines Ultraschall-Melders, einer Lichtschranke, einer Induktionsschleife oder eines Mikrophons festgestellt werden, ob sich eine Person oder ein Fahrzeug der Basisstation nähert, die einen Transponder mitführen könnten, oder es wird eine Taste abgefragt, die von der sich nähernden Person automatisch oder manuell betätigt werden kann.

In Schritt 24 wird für den Fall, daß sich keine zu aktivierende Systemkomponente in der Nähe befinden kann, zurück zu Schritt 21 verzweigt, um in den Schlafmodus zurückzukehren.

Befindet sich jedoch mit hoher Wahrscheinlichkeit eine zu aktivierende Systemkomponente in der Nähe, da beispielsweise eine Person in der Nähe festgestellt wurde, so werden alle Systemeinrichtungen, jedenfalls jedoch der entsprechende Sender 3, 4 und Empfänger 5, 6 eingeschaltet und damit ein aktiver Modus eingeleitet (Schritt 25).

Daraufhin wird ein Aktivierungssignal abgesandt und auf ein Antwortsignal (Quittierung) durch die zu aktivierende Systemkomponente gewartet (Schritt 26).

Erfolgt keine Quittierung, so verzweigt Schritt 27 zurück zu Schritt 21, um die Systemkomponente zurück in den Schlafmodus zu bringen. Bei Empfang eines Antwortsignals, d.h. wenn sich tatsächlich eine zu aktivierende Systemkomponente in der Nähe befindet, veranlaßt die Zustandssteuerung in Schritt 28 zunächst das Abarbeiten des Kontrollprotokolls und dann die Rückkehr in den Schlafmodus.

Die von ihrer Zustandssteuerung kontrollierte Arbeitsweise der zu aktivierenden Systemkomponente ist in Fig. 3 dargestellt. Demnach werden alle Systemeinrichtungen außer der zugehörigen Zustandssteuerung ausgeschaltet, um auch diese Systemkomponente in einen Schlafmodus zu setzen (Schritt 31). Der Schlafmodus wird für eine Wartezeit $T_{sleep.Rx}$ beibehalten (Schritt 32).

Anschließend wird die Systemkomponente in den Detektormodus gebracht, in dem der Empfänger 5, 6 kurzzeitig eingeschaltet wird, um zu prüfen, ob eine aktivierende Systemkomponente ein Aktivierungssignal sendet (Schritt 33). Wurde kein Aktivierungssignal empfangen, so verzweigt Schritt 34 zurück zu Schritt 31 und die Systemkomponente kehrt in den Schlafmodus zurück.

Wurde jedoch ein Aktivierungssignal empfangen, so geht die Systemkomponente in den aktiven Modus über, in dem alle Systemeinrichtungen (Sender 3, 4 und Protokollsteuerung 7, 8) eingeschaltet sind (Schritt 35). Im aktiven Modus wird zunächst ein Antwortsignal als Quittierung an die aktivierende Komponente gesendet (Schritt 36) und sodann mit dieser das Abarbeiten des Kontrollprotokolls begonnen (Schritt 37). Nach dem Abarbeiten des Kontrollprotokolls kehrt auch die zu aktivierende Systemkomponente in den Schlafmodus zurück.

Der Energieverbrauch des Systems ist um so geringer, je länger die Wartezeiten $T_{sleep.Tx}$ und $T_{sleep.Rx}$ gewählt werden. Bei zu langen Wartezeiten ergibt sich jedoch eine merkliche Verzögerung zwischen der Annäherung des Transponders an die Basisstation und der Aktivierung des Systems. Günstige Werte liegen zwischen 1/100 sec und 5 sec.

Die Dauer des Aktivierungssignals soll die Wartezeit $T_{sleep.Rx}$ um einen kleinen Wert überschreiten, damit das Aktivierungssignal in Schritt 33 sicher erkannt wird.

Unter der Annahme, daß die Systemkomponenten in aller Regel vom Detektormodus unmittelbar in den Schlafmodus zurückkehren und der Energieverbrauch des aktiven Modus somit vernachlässigt werden kann, beträgt die mittlere Leistungsaufnahme der aktivierenden Systemkomponente:

$$P_{Tx} = (P_{sleep.Tx} * T_{sleep.Tx} + P_{detect.Tx} * T_{detect.Tx}) / T_{sleep.Tx} + T_{detect.Tx}$$

und für die Leistungsaufnahme der zu aktivierenden Systemkomponente gilt:

$$P_{Rx} = (P_{sleep.Rx} * T_{sleep.Rx} + P_{detect.Rx} * T_{detect.Rx}) / T_{sleep.Rx} + T_{detect.Rx}$$

wobei $P_{sleep.Tx}$ und $P_{sleep.Rx}$ die Leistungsaufnahme der aktiverenden und der zu aktivierenden Systemkomponente im Schlafmodus, $P_{detect.Tx}$ und $P_{detect.Rx}$ die jeweiligen Leistungsaufnahmen im Detektormodus und $T_{detect.Tx}$ und $T_{detect.Rx}$ die jeweiligen Verweildauern im Detektormodus vor der Rückkehr in den Schlafmodus darstellen.

Die Wartezeiten im Schlafmodus sind vorteilhafterweise etwa 100 bis 1000 mal größer als die Verweildauern im Detektormodus. Damit gilt näherungsweise:

$$P_{Tx} = P_{sleep.Tx} + P_{detect.Tx} * T_{detect.Tx}) / T_{sleep.Tx}$$

$$P_{Rx} = P_{sleep.Rx} + P_{detect.Rx} * T_{detect.Rx} / T_{sleep.Rx}$$

Die mittlere Leistungsaufnahme des Systems ist also im wesentlichen durch die geringe Leistungsaufnahme des Schlafmodus und einen sehr kleinen Bruchteil der Leistungsaufnahme des Detektormodus bestimmt.

In einem bereits angesprochenen Ausführungsbeispiel bildet die Basisstation die aktivierende und der Transponder die zu aktivierende Systemkomponente. Im Detektormodus stellt die Basisstation mittels eines Annäherungssensors fest, ob sich eine Person oder ein Fahrzeug nähert. Ist dies der Fall, so wird mittels des Aktivierungssignals und des möglicherweise zurückerhaltenen Antwortsignals (Quittierung) erkannt, ob die Person oder das Fahrzeug auch einen Transponder mitführen. Bei der Abarbeitung des Kontrollprotokolls wird dann die Zugangsberechtigung verifiziert.

Vorteilhafterweise kann dieses Ausführungsbeispiel auch so abgeändert werden, daß die Basisstation im Detektormodus nicht (nur) die Annäherung einer Person oder eines Fahrzeugs sondern direkt die Annäherung eines Transponders erkennt. Dazu emittiert sie ein Sensor-Signal und wertet die zurückerhaltenen Echos aus. Bestimmte Echos sind typisch für Transponder der vorliegenden Art. Besteht das Sensor-Signal beispielsweise aus einem elektromagnetischen Impuls, so läßt sich ein Transponder mit nichtlinearem Reflexionsverhalten anhand von Oberwellen im Echosignal erkennen. Ein solcher Transponder kann einen ferromagnetischen Metallstreifen, der von dem Sensor-Signal in den Bereich der Sättigung gebracht wird, oder einen etwa auf Resonanz mit dem Sensor-Signal abgestimmten Hochfrequenz- oder Radar-Schwingkreis, dem eine Diode mit nichtlinearer Kennlinie hinzugefügt ist, aufweisen.

Es ist ökonomisch, für das Aussenden des Sensor-Signals und den Empfang des Echos den Sender 3, 4 und den Empfänger 5, 6 zu verwenden, die auch der Übertragung des Aktivierungssignals, des Antwortsignals und der Datenübertragung nach dem Kontrollprotokoll dienen.

Bei einem anderen Ausführungsbeispiel wird der Übergang vom Schlafmodus in den Detektormodus nicht automatisch nach einer Wartezeit $T_{sleep.Tx}$ sondern durch manuelle Betätigung eines Schalters oder Berührungssensors bewirkt. Beim Einsatz in Wohnungstürschlössern ist der Schalter oder Berührungssensor vorteilhafterweise im Türknauf angebracht. Die Schritte 22 und 23 aus Fig. 2 sind durch einen Schritt zur Erkennung des Tastendrucks oder der Berührung eines Sensors ersetzt.

Bei einem weiteren Ausführungsbeispiel bildet die Basisstation die zu aktivierende Systemkomponente und der Transponder die aktivierende Systemkomponente. Durch Druck auf eine Taste wird der Transponder veranlaßt, den Schlafmodus zu verlassen und ein Aktivierungssignal gemäß Schritt 26 an die Basisstation zu senden.

Die beiden Komponenten des Systems können auch die Basisstation und das Handgerät eines Funktelefonsystems darstellen, wobei beide zunächst wie oben für die zu aktivierende Systemkomponente beschrieben arbeiten. Wenn ein Benutzer jedoch vom Handgerät einen Anruf beginnt, so sendet das Handgerät das Aktivierungssignal aus und nimmt die Rolle der aktivierenden Systemkomponente an. Umgekehrt arbeitet die Basisstation unter Aussenden des Aktivierungssignals als aktivierende Systemkomponente, sobald bei ihr ein Telefonruf eingeht, der an das Handgerät weitergeleitet werden soll. Die Schritte 28 und 37 der Fig. 2 und 3 sind dabei stets durch die Übertragung eines Telefongesprächs ersetzt. Die Schritte 22, 23 und 24 der Fig. 2 werden durch einen Schritt ersetzt, in dem die aktivierende Komponente, wenn sie die Basisstation darstellt, einen vom Amtsnetz eingehenden Telefonanruf feststellt oder, wenn sie das Handgerät darstellt, einen Tastendruck ermittelt, mit dem der Benutzer den Beginn eines Telefongesprächs anzeigt.

### Patentansprüche

1. Verfahren zur Steuerung eines Systems bei der Aufnahme einer Datenübertragung zwischen einer ersten und einer zweiten Komponente (1, 2) des Systems, wobei die erste Komponente dann, wenn bei ihr Bedarf für die Datenübertragung vorliegt, ein Aktivierungssignal an die zweite Komponente sendet, um diese zur Aufnahme der Datenübertragung zu aktivieren, wobei die erste Komponente einen Transponder (2) und die zweite Komponente eine Basisstation (1) eines Kontrollsystems darstellt, **dadurch gekennzeichnet, daß**

   die zweite Komponente wiederholt eine Empfangseinrichtung (5, 6) in Empfangsbereitschaft setzt, um ein Aussenden des Aktivierungssignals der ersten Komponente festzustellen, und daß sie dann, wenn sie dies nicht feststellen kann, die Empfangsbereitschaft für eine Wartezeit ($T_{sleep.Rx}$) wieder aufhebt, während sie sich bei Empfang des Aktivierungssignals für die Datenübertragung aktiviert,

   wobei das Aktivierungssignal von der ersten Komponente für eine längere Zeitspanne als die genannte Wartezeit ($T_{sleep.Rx}$) ausgesandt wird.

2. Verfahren zur Steuerung eines Systems bei der Aufnahme einer Datenübertragung zwischen einer ersten und einer zweiten Komponente (1, 2) des Systems, wobei die erste Komponente dann, wenn bei ihr Bedarf für die Datenübertragung vorliegt, ein Aktivierungssignal an die zweite Komponente sendet, um diese zur Aufnahme der Datenübertragung zu aktivieren, wobei die erste und die zweite Komponente wechselweise die Basisstation oder das Handgerät eines Funktelefonsystems darstellen und die genannte Datenübertragung das Einrichten einer Telefonverbindung beinhaltet, **dadurch gekennzeichnet, daß**

   die zweite Komponente wiederholt eine Empfangseinrichtung (5, 6) in Empfangsbereitschaft setzt, um ein Aussenden des Aktivierungssignals der ersten Komponente festzustellen, und daß sie dann, wenn sie dies nicht feststellen kann, die Empfangsbereitschaft für eine Wartezeit ($T_{sleep.Rx}$) wieder aufhebt, während sie sich bei Empfang des Aktivierungssignals für die Datenübertragung aktiviert,

   wobei das Aktivierungssignal von der ersten Komponente für eine längere Zeitspanne als die genannte Wartezeit ($T_{sleep.Rx}$) ausgesandt wird.

3. Verfahren nach Anspruch 1 oder 2, wobei die Datenübertragung die Abarbeitung eines Kontrollprotokolls zur Identifizierung einer der genannten Komponenten durch die andere beinhaltet und die erste Komponente die Betätigung eines Schalters oder Berührungssensors prüft, um festzustellen, ob Bedarf für die Datenübertragung vorliegt.

**4.** Verfahren nach Anspruch 1 oder 2, wobei die Datenübertragung die Abarbeitung eines Kontrollprotokolls zur Identifizierung einer der genannten Komponenten durch die andere beinhaltet und die zweite Komponente das Ansprechen eines annäherungssensitiven Sensors, vorzugsweise eines Radarsensors oder Infrarotmelders prüft, um festzustellen, ob Bedarf für eine Datenübertragung besteht.

**5.** Verfahren nach Anspruch 4, wobei das genannte Prüfen periodisch jeweils für kurze Zeit erfolgt.

**6.** Verfahren nach einem der Ansprüche 1 bis 5, wobei die zweite Komponente bei Empfang des Aktivierungssignals ein Antwortsignal aussendet und die erste Komponente eine ihr zugeordnete Empfangseinrichtung (5, 6) in Empfangsbereitschaft setzt, um das Antwortsignal zu empfangen.

**7.** System zur Aufnahme einer Datenübertragung zwischen einer ersten und einer zweiten Komponente (1, 2) des Systems,
wobei die erste Komponente eine Sendeeinrichtung (3, 4) aufweist, um dann, wenn bei ihr Bedarf für die Datenübertragung vorliegt, ein Aktivierungssignal an die zweite Komponente zu senden, und
wobei die zweite Komponente eine Empfangseinrichtung (5, 6) aufweist, um das Aktivierungssignal zu empfangen, woraufhin sie sich für die Datenübertragung aktiviert, wobei die erste Komponente ein Transponder (2) und die zweite Komponente eine Basisstation eines Kontrollsystems darstellt, **dadurch gekennzeichnet, daß**
die zweite Komponente eine Steuereinrichtung (9, 10) aufweist, die die Empfangseinrichtung (5, 6) wiederholt in Empfangsbereitschaft setzt, um das Aussenden des Aktivierungssignals durch die erste Komponente festzustellen, und die dann, wenn kein Aktivierungssignal festgestellt werden konnte, die Empfangsbereitschaft für eine Wartezeit ($T_{sleep.Rx}$) wieder aufhebt, während sie dann, wenn das Aktivierungssignal empfangen werden konnte, die zweite Komponente zur Datenübertragung aktiviert, und
die erste Komponente eine Einrichtung (9, 10) aufweist, um das genannte Aktivierungssignal für eine längere Zeitspanne als die genannte Wartezeit ($T_{sleep.Rx}$) auszusenden.

**8.** System zur Aufnahme einer Datenübertragung zwischen einer ersten und einer zweiten Komponente (1, 2) des Systems,
wobei die erste Komponente eine Sendeeinrichtung (3, 4) aufweist, um dann, wenn bei ihr Bedarf für die Datenübertragung vorliegt, ein Aktivierungssignal an die zweite Komponente zu senden, und
wobei die zweite Komponente eine Empfangseinrichtung (5, 6) aufweist, um das Aktivierungssignal zu empfangen, woraufhin sie sich für die Datenübertragung aktiviert,
wobei die erste und die zweite Komponente wechselweise die Basisstation (1) oder das Handgerät eines Funktelefonsystems darstellen und die genannte Datenübertragung das Einrichten einer Telefonverbindung beinhaltet, **dadurch gekennzeichnet, daß**
die zweite Komponente eine Steuereinrichtung (9, 10) aufweist, die die Empfangseinrichtung (5, 6) wiederholt in Empfangsbereitschaft setzt, um das Aussenden des Aktivierungssignals durch die erste Komponente festzustellen, und die dann, wenn kein Aktivierungssignal festgestellt werden konnte, die Empfangsbereitschaft für eine Wartezeit ($T_{sleep.Rx}$) wieder aufhebt, während sie dann, wenn das Aktivierungssignal empfangen werden konnte, die zweite Komponente zur Datenübertragung aktiviert, und
die erste Komponente eine Einrichtung (9, 10) aufweist, um das genannte Aktivierungssignal für eine längere Zeitspanne als die genannte Wartezeit ($T_{sleep.Rx}$) auszusenden.

**Claims**

**1.** A method of controlling a system when a data transfer between a first and a second component (1, 2) of the system is initiated, wherein the first component, if requested to transmit data, sends out a an activation signal to the second component in order to activate the latter to start the data transfer, wherein the first component is a transponder (2) and the second component is a base station (1) of a control system, **characterised in that**
the second component repeatedly puts a receiving means (5, 6) in a ready-to-receive mode in order to determine the transmission of an activation signal sent out by the first component and, if such a signal cannot be detected, lifts the ready-to-receive mode for a waiting time ($T_{sleep.Rx}$) whereas it gets activated if it has received the activation signal for the data transfer,
wherein the activation signal is sent out by the first component for a longer period of time than said sleeping time ($T_{sleep.Rx}$).

**2.** A method of controlling a system when a data transfer between a first and a second component (1, 2) of the system is initiated, wherein the first component, if requested to transmit data, transmits an activation signal to the second component to activate the latter to transmit data,

wherein the first and second components alternatively constitute the base station or the handheld unit of a cellular phone and said data transmission includes the establishment of a telephone connection, **characterised in that** the second component repeatedly puts a receiving means (5, 6) in the ready-to-receive mode in order to determine the transmission of the activation signal of the first component and, if it cannot determine such a transmission, lifts the ready-to-receive mode for a waiting time ($T_{sleep.Rx}$) whereas it gets activated if it receives the activation signal for data transmission,

wherein the activation signal is sent out by the first component for a period of time that is longer than said waiting time ($T_{sleep.Rx}$).

3. The method according to claim 1 or 2, wherein the data transmission includes the processing of a control protocol for identification of one of said components by the other and the first component examines the operation of a switch or contact sensor in order to determine whether data transmission is requested.

4. The method according to claim 1 or 2, wherein the data transmission includes the processing of a control protocol for identification of one of said components by the other and the second component examines the response of an approach sensor, preferably a radar or an infrared sensor, in order to determine whether a data transmission is requested.

5. The method according to claim 4, wherein said checks are carried out periodically for a short period of time.

6. The method according to any of claims 1 to 5, wherein the second component sends out a response signal when receiving an activation signal and the first component puts an associated receiving means (5, 6) in the ready-to-receive mode for receiving the response signal.

7. A system for initiating data transmission between a first and a second component (1, 2) of the system,

wherein the first component is provided with a transmitter (3, 4) in order to send out an activation signal to the second component if data transmission is requested, and

wherein the second component is provided with a receiving means (5, 6) for receiving the activation signal whereupon it gets activated for data transmission,

wherein the first component is a transponder (2) and the second component is a base station (1) of a control system, **characterised in that**

the second component is provided with a control means (9, 10) that puts the receiving means (5, 6) repeatedly in the ready-to-receive mode in order to determine the transmission of the activation signal by the first component and, if no activation signal is determined, lifts the ready-to-receive mode for a waiting time ($T_{sleep.Rx}$) while activating the second component to transmit data if the activation signal could be received, and

the first component is provided with a means (9, 10) to send out said activation signal for a period of time that is longer than said waiting time ($T_{sleep.Rx}$).

8. A system for initiating data transmission between a first and a second component (1, 2) of the system,

wherein the first component is provided with a transmitter (3, 4) in order to send out an activation signal to the second component if data transmission is requested, and

wherein the second component is provided with a receiving means (5, 6) for receiving the activation signal whereupon it gets activated for data transmission,

wherein the first and second components are alternatively the base station or the handheld unit of a cellular phone system and said data transmission includes the establishment of a telephone connection, **characterised in that**

the second component is provided with a control means (9, 10) that repeatedly puts the receiving means (5, 6) in a ready-to-receive mode in order to determine the transmission of the activation signal by the first component and lifts the ready-to-receive mode for a waiting time ($T_{sleep.Rx}$) if no activation signal could be determined while activating the second component to transmit data if the activation signal could be received, and

the first component is provided with a means (9, 10) in order to send out said activation signal for a period of time that is longer than said waiting time ($T_{sleep.Rx}$).

**Revendications**

1. Procédé pour commander un système lors du commencement d'une transmission de données entre des premier et second composants (1, 2) du système, dans lequel, lorsque pour le premier composant il existe un besoin de la transmission de données, le premier composant émet un signal d'activation en direction du second composant de manière à activer ce dernier pour le commencement de la transmission de données, le premier composant étant un transpondeur (2) et le second composant étant une station de base (1) d'un système de contrôle, **caractérisé en ce**

**que** le second composant place de façon répétée un dispositif de réception (5, 6) dans l'état prêt pour la réception, de manière à déterminer l'émission du signal d'activation par le premier composant, et que, lorsqu'il ne peut pas établir cela, il supprime à nouveau l'état prêt pour la réception pendant un temps d'attente ($T_{sleep.Rx}$), alors qu'il s'active, lors de la réception du signal d'activation, pour la transmission de données,

dans lequel le signal d'activation est émis par le premier composant pendant un intervalle de temps supérieur audit temps d'attente ($T_{sleep.Rx}$).

2. Procédé pour commander un système lors du commencement d'une transmission de données entre des premier et second composants (1, 2) du système, dans lequel, lorsque pour le premier composant il existe un besoin de la transmission de données, le premier composant émet un signal d'activation en direction du second composant de manière à activer ce dernier pour le commencement de la transmission de données, les premier et second composants représentant alternativement la station de base ou l'appareil manuel d'un système de radiotéléphone et ladite transmission de données incluant l'établissement d'une liaison téléphonique, **caractérisé en ce**

**que** le second composant met de façon répétée le dispositif de réception (5, 6) dans l'état prêt pour la réception, de manière à déterminer l'émission du signal d'activation par le premier composant, et que, lorsqu'il ne peut pas établir cela, il supprime à nouveau l'état prêt pour la réception pendant un temps d'attente ($T_{sleep.Rx}$), alors qu'il s'active, lors de la réception du signal d'activation, pour la transmission de données,

dans lequel le signal d'activation est émis par le premier composant pendant un intervalle de temps supérieur audit temps d'attente ($T_{sleep.Rx}$).

3. Procédé selon la revendication 1 ou 2, selon lequel la transmission de données inclut l'élaboration d'un protocole de contrôle pour identifier l'un desdits composants par l'autre et le premier composant contrôle l'actionnement d'un interrupteur ou d'un capteur de contact pour déterminer s'il existe un besoin pour la transmission de données.

4. Procédé selon la revendication 1 ou 2, selon lequel la transmission de données inclut l'élaboration d'un protocole de contrôle pour identifier l'un desdits composants par l'autre et le second composant contrôle la réponse d'un capteur sensible à un rapprochement, de préférence un capteur radar ou un transmetteur infrarouge, pour déterminer s'il existe un besoin d'une transmission de données.

5. Procédé selon la revendication 4, selon lequel ledit contrôle s'effectue périodiquement respectivement pendant un bref intervalle de temps.

6. Procédé selon l'une des revendications 1 à 5, selon lequel le second composant émet, lors de la réception du signal d'activation, un signal de réponse et le premier composant place un dispositif de réception (5, 6), qui lui est associé, dans l'état prêt pour la réception de manière à recevoir le signal de réponse.

7. Système pour commencer une transmission de données entre des premier et second composants (1, 2) du système,

dans lequel le premier composant comporte un dispositif d'émission (3, 4) pour envoyer un signal d'activation au second composant lorsque, dans ce dispositif, il existe un besoin pour la transmission de données, et

dans lequel le second composant comporte un dispositif de réception (5, 6) pour recevoir le signal d'activation, à la suite de quoi il s'active pour la transmission de données,

dans lequel le premier composant est un transpondeur (2) et le second composant est une station de base (1) d'un système de contrôle, **caractérisé en ce**

**que** le second composant comporte un dispositif de commande (9, 10), qui place de façon répétée le dispositif de réception (5, 6) dans l'état prêt pour la réception, de manière à déterminer l'émission du signal d'activation par le premier composant, et qui, lorsqu'aucun signal d'activation n'a pu être fixé, supprime à nouveau l'état prêt pour la réception pendant une durée d'attente ($T_{sleep.Rx}$) alors qu'il active le second composant pour la transmission de données lorsque le signal d'activation a pu être reçu, et

dans lequel le premier composant comporte un dispositif (9, 10) servant à émettre ledit signal d'activation pendant un intervalle de temps supérieur audit temps d'attente ($T_{sleep.Rx}$).

8. Système pour le commencement d'une transmission de données entre des premier et second composants (1, 2) du système,

dans lequel le premier composant comporte un dispositif d'émission (3, 4) pour envoyer un signal d'activation au second composant lorsque, dans ce dispositif, il existe un besoin pour la transmission de données, et

dans lequel le second composant comporte un dispositif de réception (5, 6) pour recevoir le signal d'activation, à la suite de quoi il s'active pour la transmission de données,

dans lequel les premier et second composants représentent alternativement la station de base ou l'appareil manuel d'un système de radiotéléphone, et ladite transmission de données inclut l'établissement d'une liaison téléphonique,

**caractérisé en ce**

**que** le second composant comporte un dispositif de commande (9, 10), qui place de façon répétée le dispositif de réception (5, 6) dans l'état prêt pour la réception, de manière à déterminer l'émission du signal d'activation par le premier composant, et qui, lorsqu'aucun signal d'activation n'a pu être fixé, supprime à nouveau l'état prêt pour la réception pendant une durée d'attente ($T_{sleep.Rx}$) alors qu'il active le second composant pour la transmission de données lorsque le signal d'activation a pu être reçu, et

dans lequel le premier composant comporte un dispositif (9, 10) servant à émettre ledit signal d'activation pendant un intervalle de temps supérieur audit temps d'attente ($T_{sleep.Rx}$).

Fig. 1

Fig. 2

Fig. 3